# NEUE EUROPÄISCHE PATENTSCHRIFT

(11) **EP 0 346 885 B2**
(45) Veröffentlichungstag und Bekanntmachung des Hinweises auf die Entscheidung über den Einspruch: **18.01.1995**
(45) Hinweis auf die Patenterteilung: 25.03.1992
(21) Anmeldenummer: 89110825.0
(22) Anmeldetag: 14.06.1989
(51) Int. Cl.: B60D 1/00

(54) **Vorrichtung zum Ankuppeln eines Anhängers an ein Fahrzeug**
Apparatus for attaching a trailer to a vehicle
Dispositif pour l'attelage d'une remorque à un véhicule

(30) Priorität: 16.06.1988 DE 8807849 U
(43) Veröffentlichungstag der Anmeldung: 20.12.1989
(73) Patentinhaber: Sauermann, Roman Johann, D-86558 Freinhausen (DE)
(72) Erfinder: Sauermann, Roman Johann, D-86558 Freinhausen (DE)
(74) Vertreter: Sasse, Volker, Dipl.-Ing.

(56) Entgegenhaltungen:
- EP-A- 0 024 972
- EP-A- 0 138 519
- EP-A- 0 184 489
- DE-A- 1 455 504
- US-A- 2 725 243
- US-A- 2 926 931

## Beschreibung

Die Erfindung betrifft eine Vorrichtung zum Ankuppeln eines Anhängers an ein Fahrzeug nach dem Oberbegriff des Anspruchs 1.

Eine Vorrichtung dieser Art ist nach der DE-A-1455504 bekannt.

Nach der EP-A 0184489 ist es bekannt, einen Trägerschaft eines Kupplungshakens,an dessen dem Kupplungshaken abgewandten Ende sich ein in anderer Weise ausgebildetes Kupplungsglied befindet, wahlweise an einem Träger einer Vorrichtung ähnlicher Art zu befestigen, so daß entweder der Kupplungshaken oder das in anderer Weise ausgebildete Kupplungsglied nach hinten vorsteht.

Aufgabe der Erfindung ist es, eine Vorrichtung nach dem Oberbegriff des Anspruchs 1 anzugeben, bei dem ein einfaches Umsetzen eines mit unterschiedlichen Kupplungsgliedern ausgebildetem Trägerschaft bei großer Befestigungssicherheit möglich ist, wobei die Schwenkbewegung des Kupplungsglieds nicht beeinträchtigt wird.

Die Lösung dieser Aufgabe ist im Kennzeichen des Anspruchs 1 angegeben.

Um das angehobene Kupplungsglied vor Verschmutzung zu bewahren und um ein Lösen zwischen dem Kupplungsglied und der Anhängerkupplung zu vermeiden, ist bevorzugt eine Ausbildung nach Anspruch 2 vorgesehen. Das Anheben und Absenken des Kupplungsglieds wird bei zusätzlicher Führung durch die Ausbildung nach Anspruch 3 erleichtert.

Zur Anpassung an verschiedene Fahrzeuge ist dabei bevorzugt eine Ausbildung nach Anspruch 4 vorgesehen.

Um das Kupplungsglied in der angehobenen Stellung zu sichern, ist bevorzugt eine Ausbildung nach Ansprauch 5 vorgesehen.

Um dabei die Verriegelungsbolzen vor Verschmutzung zu bewahren, ist bevorzugt eine Ausbildung nach Anspruch 6 vorgesehen.

Eine konstruktive Vereinfachung ergibt sich durch die Ausbildung nach Anspruch 7.

Eine besonders stabile Anordnung erhält man durch die Ausbildung nach Anspruch 8.

Um das Absenken und Anheben des Kupplungsglieds formschlüssig zu begrenzen, ist bevorzugt eine Ausbildung nach Anspruch 9 vorgesehen.

Die Erfindung wird im folgenden an einem Ausführungsbeispiel unter Hinweis auf die beigefügten Zeichnungen beschrieben.

Fig. 1 zeigt den hinteren Teil eines Traktors in Seitenansicht bei angehobenem Kupplungsglied.

Fig. 2 zeigt vergrößert den unteren hinteren Teil des Traktors nach Fig. 1 in Seitenansicht bei abgesenktem Kupplungsglied.

Fig. 3 zeigt den mittleren unteren Bereich des Traktors von hinten bei abgesenktem Kupplungsglied.

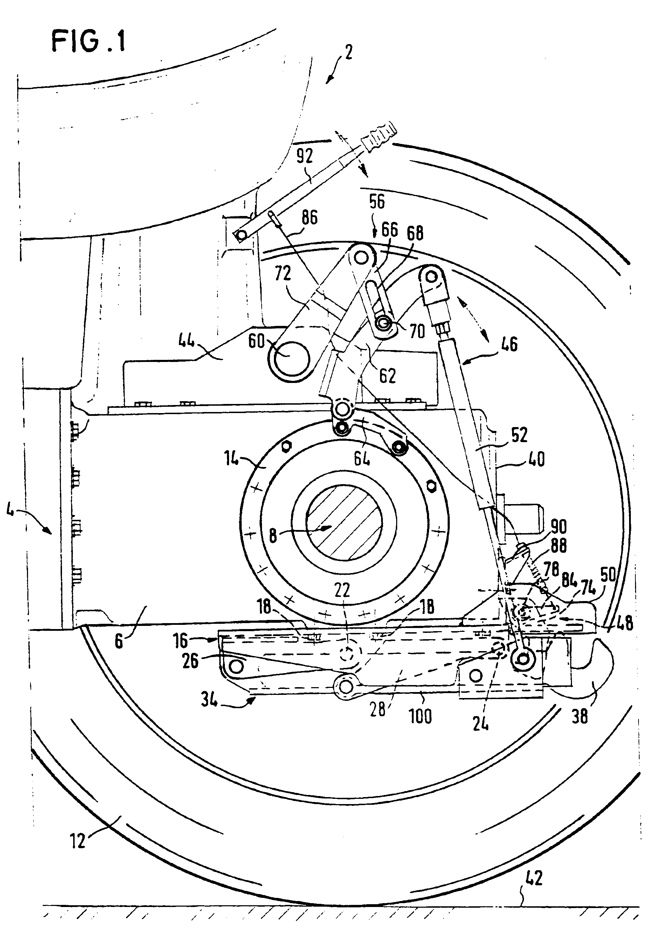

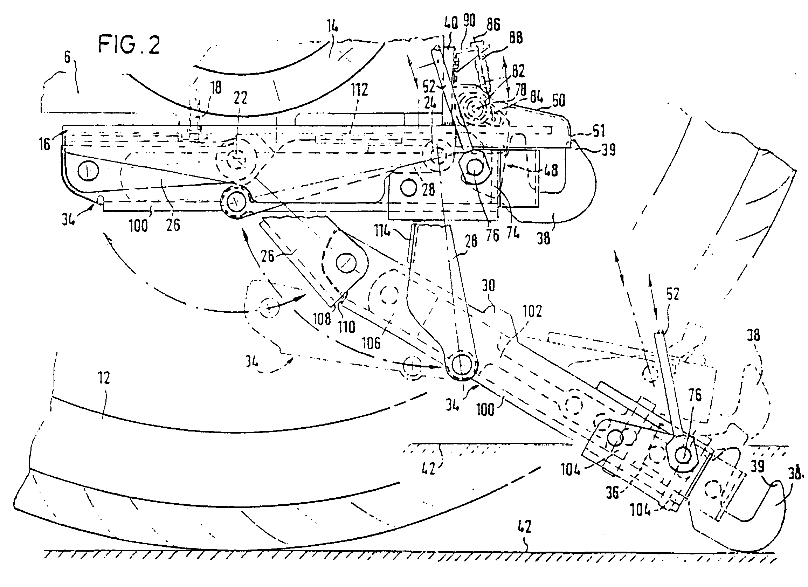

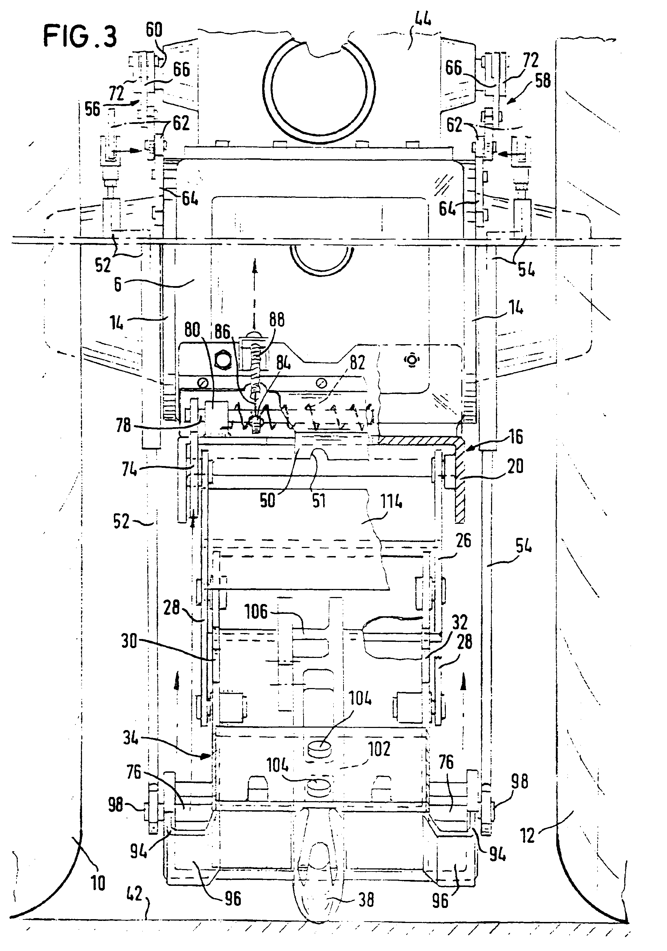

Der Traktor 2 nach dem Ausführungsbeispiel weist ein Fahrgestell 4 auf, an dem hinten ein Getriebe- und Lagergehäuse 6 für eine durchgehende Hinterradachse 8 angesetzt sind, an deren freien Enden Räder 10, 12 sitzen. Die Achse 8 ist an beiden Seiten des Gehäuses 6 durch Lagerflansche 14 geführt. An der Unterseite des Gehäuses 6 ist ein im Querschnitt U-förmiger, nach unten offener Kasten 16 mittels Schrauben 18 befestigt. Innerhalb der nach unten weisenden Schenkel 20 des Kastens 16 sind an dem Kasten auf jeweils einer gemeinsamen Schwenkachse 22 bzw. 24 zwei hintere Lenker 26 und zwei vordere Lenker 28 angelenkt. An den freien Enden dieser Lenker 26, 28 sind die Längsschenkel 30, 32 eines U-Trägers 34 angelenkt, an dessen Querschenkel 36 ein nach hinten weisendes Kupplungsglied 38 in Form eines nach oben offenen Hakens angebracht ist. Die Lenker 26, 28 sind derart bemessen, daß der U-Träger 34 aus einerangehobenen Stellung (Fig. 1 und 2), in der er waagerecht unter dem Kasten 16 von dem Kasten 16 beidseitig umschlossen verläuft und in der das Kupplungsglied 38 nahe dem Heck 40 des Traktors liegt, in eine abgesenkte Stellung (Fig. 2 und 3) überführbar ist, in der der U-Träger 34 unter Verlagerung nach rückwärts schräg nach unten hinten verläuft und das Kupplungsglied 38 auf oder nahe der Fahrfläche 42 liegt.

Der U-Träger 34 ist mittels einer von einem Hydraulikmotor 44 anzutreibenden Hub- und Senkvorrichtung 46 in der beschriebenen Weise anzuheben und abzusenken. Zum Verriegeln des U-Trägers 34 in der angehobenen Stellung ist eine lösbare Verriegelungsvorrichtung 48 vorgesehen.

Am Heck 40 ist eine Abdeckung 50 (keeper-plate) zum Abdecken des Kupplungsglieds 38 in der angehobenen Stellung und zum Sichern eines mit dem Kupplungsglied 38 gekuppelten Gegenkupplungsglieds, beispielsweise einer Öse an einer Zugstange, angebracht. Die Abdeckung 50 weist in ihrer hinteren Unterkante mittig eine Ausnehmung 51 zur Aufnahme der Nase 39 des Kupplungshakens 38 auf.

Die Hub- und Senkvorrichtung 46 weist an den Außenseiten der hinteren Enden der Längsschenkel 30, 32 des U-Trägers 34 angelenkte Hub- und Senkstangen 52, 54 auf, deren freie Enden über Hebelgestänge 56, 58 mit den Enden einer Ausgangswelle 60 des Hydraulikmotors 44 verbunden sind. Der Hydraulikmotor 44 dient somit als Hub- und Senkmotor. Er ist auf der Oberseite des Gehäuses 6 angeschraubt. Jedes Hebelgestänge besteht aus einem einarmigen Hebel 62, der über ein Verbindungsstück 64 an einem der Flansche 14 angelenkt ist und an dessen freies Ende eine der Hub- und Senkstangen 52, 54 angelenkt ist. An den Mittelbereich jedes einarmigen Hebels 62 ist ein Lenker 66 angelenkt. Die effektive Länge des Lenkers ist durch eine Schlitzführung 68 für eine Festsetzschraube 70 verstellbar, wodurch der Hub des Hebelgestänges 56 bzw. 58 einstellbar ist. Das andere Ende des Lenkers 66 ist an einem Arm 72 angelenkt, der auf dem jeweiligen Ende der Ausgangswelle 60 sitzt. Auch die Längen der Hub- und Senkstangen 52, 54 sind verstellbar. Am Heck 40 des Traktors 2 ist über den Längsschenkeln 30, 32 des U-Trägers 34 jeweils ein nach vorne offener Verriegelungshaken 74 zum Untergreifen eines Verriegelungsbolzens 76 am hinteren Ende jedes Längsschenkels 30, 32 des U-Trägers 34 angelenkt. Die beiden Verriegelungshaken 74 sitzen auf den Enden einer ihnen gemeinsamen Welle 78, die in Böcken 80 auf der Oberseite des Kastens 16 gelagert ist und durch eine sie umschlingende Schraubenfeder 82 in Verriegelungsstellung der Verriegelungshaken 74 federnd vorgespannt ist. An der Welle 78 sitzt ein Arm 84, an den die Seele 86 eines Bowdenzugs 88 angreift. Dieser Bowdenzug 88 ist durch einen Bügel 90 am Fahrzeugheck abgestützt. Die Seele 86 ist an einem Betätigungshebel 92 befestigt, der vom Fahrer bedienbar hinten am Traktor 2 angelenkt ist. Die Verriegelungsbolzen 76 sind mit seitlichen und hinteren Abdeckungen 94, 96 versehen, die am U-Träger 34 angebracht sind.

Die Hub- und Senkstangen 52, 54 sind an aus den seitlichen Abdeckungen 94 herausragenden Abschnitten 98 der Verriegelungsbolzen 76 angelenkt.

Der U-Träger 34 ist unterseitig mit einer Platte 100 abgedeckt, so daß U-Träger 34 und Platte 100 einen nach oben offenen Kasten bilden. Auf der Platte ist ein Trägerschaft 102 des Kupplungshakens 38 mit Schrauben 104 befestigt. An dem den Kupplungshaken 38 abgewandten Ende des Schafts 102 befindet sich ein in anderer Weise ausgebildetes Kupplungsglied 106, das wahlweise nach Lösen des Schafts 102 und Umdrehen des Schafts 102 benutzt werden kann.

An den Lenkern 26, 28, an dem U-Träger 34 und an dem Kasten 16 befinden sich Anschlagflächen 108, 110, 112, 114 zur Begrenzung der Endlagen des U-Trägers 34. Die Anschlagflächen 108, 110 sorgen überdies dafür, daß der U-Träger 34 in der abgesenkten Stellung nicht in Übertotpunktlage zu den Lenkern 26 gerät.

## Patentansprüche

1. Vorrichtung zum Ankuppeln eines Anhängers an ein Fahrzeug (2), insbesondere an einen Traktor, mit symmetrisch zur Fahrzeugmittellinie unter dem Heckbereich des Fahrzeugs (2) angelenkten vorderen Lenkern (26) und hinteren Lenkern (28), an deren freien Enden parallele Längsschenkel (30, 32) eines durch diesen Längsschenkel mit seinem Querschenkel (36) gebildeten U-Trägers (34) angelenkt sind, der im hinteren Bereich den Querschenkel (36) aufweist, an dem ein nach hinten weisendes Kupplungsglied (38) festgelegt ist, wobei die Lenker (26, 28) derart bemessen sind, daß der U-Träger (34) aus einer angehobenen Stellung, in der er waagerecht unter dem Heckbereich des Fahrzeugs (2) verläuft und das Kupplungsglied (38) nahe dem Heckbereich liegt, in eine abgesenkte Stellung überführbar ist, in der der U-Träger (34) unter Verlagerung nach rückwärts schräg nach unten hinten verläuft und das Kupplungsglied (38) auf oder nahe der Fahrfläche (42) liegt, mit einer Hub- und Senkvorrichtung (46) für den U-Träger (34) und mit einer lösbaren Verriegelungsvorrichtung (48) zum Verriegeln des U-Trägers (34) in der angehobenen Stellung, dadurch gekennzeichnet, daß der U-Träger (34) unterseitig mit einer Platte (100) abgedeckt ist, so daß der U-Träger (34) und die Platte (100) einen nach oben offenen Kasten bilden, und daß auf der Platte (100) ein Trägerschaft (102) des Kupplungsglieds (38), an dessen dem Kupplungsglied (38) abgewandten Ende sich ein in anderer Weise ausgebildetes Kupplungsglied (106) befindet, mit Schrauben (104) lösbar befestigt ist und daß sich an den Lenkern (26, 28), dem U-Träger (34) und der Unterseite des Heckbereichs Anschlagflächen (108, 110, 112, 114) zur Begrenzung der Endlagen des U-Trägers befinden.

2. Vorrichtung nach Anspruch 1, dadurch gekennzeichnet, daß am Heckbereich eine Abdeckung (50) (keeper-plate) zum Abdecken des Kupplungsglieds (38) in der angehobenen Stellung und zum Sichern eines mit dem Kupplungsglied (38) gekuppelten Gegenkupplungsglieds angebracht ist.

3. Vorrichtung nach Anspruch 1 oder 2, dadurch gekennzeichnet, daß an den Außenseiten der hinteren Enden der Längsschenkel (30, 32) des U-Trägers (34) Hub- und Senkstangen (52, 54) angelenkt sind, deren freie Enden über Hebelgestänge (56, 58) mit den Enden einer Ausgangswelle (60) eines an dem Heckbereich des Fahrzeugs (2) angebrachten hydraulischen Hub- und Senkmotors (44) verbunden sind.

4. Vorrichtung nach Anspruch 3, dadurch gekennzeichnet, daß der Hub des Hebelgestänges (56, 58) einstellbar ausgebildet ist.

5. Vorrichtung nach einem der vorstehenden Ansprüche, dadurch gekennzeichnet, daß am Heckbereich über den Längsschenkeln (30, 32) des U-Trägers (34) nach vorne offene Verriegelungshaken (74) zum Untergreifen von Verriegelungsbolzen (76) an den hinteren Enden der Längsschenkel (30, 32) des U-Trägers (34) angelenkt sind, und daß diese Verriegelungshaken (74) in Verriegelungsstellung federnd vorgespannt und durch einen vom Fahrzeug (2) aus betätigbaren Bowdenzug (88) aus ihrer Verriegelungsstellung schwenkbar sind.

6. Vorrichtung nach Anspruch 5, dadurch gekennzeichnet, daß die Verriegelungsbolzen (76) mit seitlichen Abdeckungen (94) und hinteren Abdeckungen (96) versehen sind.

7. Vorrichtung nach Anspruch 3 und 6, dadurch gekennzeichnet, daß die Hub- und Senkstangen (52, 54) an aus den seitlichen Abdeckungen (94) herausragenden Abschnitten (98) der Verriegelungsbolzen (76) angelenkt sind.

## Claims

1. A device for coupling a trailer to a vehicle (2), in particular a tractor, having front links (26), which are articulated symmetrically to the vehicle centre line below the tail region of the vehicle (2), and rear links (28), the free ends of said links are connected in an articulated manner to a plurality of longitudonal parallel arms (30, 32) of a U-shaped support member (34) which is formed by said longitudonal arms (30, 32) and a transverse arm (36), said U-shaped support member (33) containing the transverse arm (36) at its tail region, where a rearwardly facing coupling member (38) is mounted, wherein the links (26, 28) are of such dimensions that the U-shaped support member (34) can be transferred from a raised position, in which it extends horizontally below the tail region of the vehicle (2) and the coupling member (38) is situated near to the tail region, into a lowered position, in which the U-shaped support member (34) extends obliquely downwards and rearwards, having been shifted rearwards, and the coupling member (38) is situated on or near the road surface (42), a raising and lowering device (46) being provided for the U-shaped support member (34) and a releasable locking device (48) being provided for locking the U-shaped support member (34) in the raised position, characterised in that on its underside the U-shaped support member (34) is covered by a plate (100) so that the U-shaped support member (34) and the plate (100) form an upwardly open box, and in theat a carrier shaft (102) of the coupling hook (38) is releasanly mounted by means of screws(104) on the plate (100), a coupling member (106) of different design being disposed at the end of said carrier shaft remote from the coupling hook (38), and that abutment faces (108, 110, 112, 114) for limiting the end positions of the U-shaped support member (34) are provided on the links (26, 28), the U-shaped support member (34) and the underside of the tail region.

2. A device according to Claim 1 characterised in that a keeper-plate (50) is mounted in the tail region for covering the coupling member (38) in the raised position and for securing a countercoupling member coupled to the coupling member (38).

3. A device according to Claim 1 or 2, characterised in that raising and lowering bars (52, 54) are articulated to the outsides of the rear ends of the longitudinal arms (30, 32) of the U-shaped support member (34), the free ends of which bars (52, 54) are connected via lever bars (56, 58) to the ends of an output shaft (6) of a hydraulic raising and lowering motor (44) mounted in the tail region of the vehicle (2).

4. A device according to Claim 3, characterised in that the travel of the lever bars (56, 58) is designed to be adjustable.

5. A device according to any one of the preceding Claims, characterised in that in the tail region, above the longitudinal arms (30, 32) of the U-shaped support member (34), forwardly open locking hooks (74) for engaging under locking pins (76) are articulated to the rear ends of the longitudinal arms (30, 32) of the U-shaped support member (34), and in that these locking hooks (74) are elastically preloaded in the locking position and can be pivoted out of their locking position by a Bowden cable (88) which can be actuated from the vehicle (2).

6. A device according to Claim 5, characterised in that the locking pins (76) are provided with lateral covers (94) and rear covers (96).

7. A device according to Claims 3 and 6, characterised in that the raising and lowering bars (52, 54) are articulated to portions (98) of the locking pins (76) projecting from the lateral covers (94).

## Revendications

1. Dispositif pour l'attelage d'une remorque à un véhicule (2), en particulier à un tracteur (2), comprenant des biellettes antérieures (26) et des biellettes postérieures (28) articulées au-dessous de la zone arrière du véhicule (2), symétriquement par rapport à l'axe médian de ce véhicule, aux extrémités libres desquelles sont reliées, de manière articulée, des branches parallèles longitudinales (30, 32), d'un support (34) en U, lequel est formé de ce branches longitudinales (30, 32) et d'une branche transversale (36), le support (34) en U présentant la branche transversale (36) dans la zone arrière, où un organe d'accouplement (38) orienté vers l'arrière est fixé, les biellettes (26, 28) étant dimensionnées de telle sorte que le support (34) en U puisse être transféré, à partir d'une position soulevée dans laquelle il s'étend horizontalement au-dessous de la zone arrière du véhicule (2) et l'organe d'accouplement (38) se trouve à proximité de la zone arrière, à une position abaissée dans laquelle ledit support (34) en U s'étend à l'oblique vers le bas et vers l'arrière, avec déport vers l'arrière, et l'organe d'accouplement (38) se trouve sur la surface de roulement (42) ou à proximité de celle-ci; un dispositif (46) de levage et d'abaissement du support (34) en U; et un dispositif de verrouillage (48) libérable, en vue de verrouiller le support (34) en U dans la posistion soulevée, **caractérisé par le fait** que le support (34) en U est recouvert par une plaque (100) à sa face inférieure, de façon telle que ledit support (34) en U et ladite plaque (100) forment un caisson ouvert vers le haut, et par le fait qu'un arbre (102) de support de l'organe d'accouplement (38) est fixé amoviblement sur la plaque (100), au moyen de boulons (104), un organe d'accouplement (106) réalisé d'une autre manière étant situé à l'extrémité dudit arbre (102) tournée à l'opposé dudit organe d'accouplement (38), et par le fait que des surfaces de butée (108, 110, 112, 114) se trouvent sur les biellettes (26, 28), sur le support (34) en U et à la face inférieure de la zone arrière, en vue de limiter les positions extrêmes dudit support (34) en U.

2. Dispositif selon la revendication 1, caractérisé par le fait qu'un capot (50) (plaque de sûreté) est installé dans la zone arrière, en vue de recouvrir l'organe d'accouplement (38) dans la position soulevée, et d'arrêter un organe d'accouplement complémentaire accouplé à l'organe d'accouplement (38).

3. Dispositif selon la revendication 1 ou 2, caractérisé par le fait que des tiges (52, 54) de levage et d'abaissement sont articulées sur les faces externes des extrémités postérieures des branches longitudinales (30, 32) du support (34) en U, tiges dont les extrémités libres sont reliées, par l'intermédiaire de tringleries (56, 58), aux extrémités d'un arbre de sortie (60) d'un moteur hydraulique (44) de levage et d'abaissement, installé dans la zone arrière du véhicule (2).

4. Dispositif selon la revendication 3, caractérisé par le fait que la course de la tringlerie (56, 58) est conçue réglable.

5. Dispositif selon l'une des revendications précédentes, caractérisé par le fait que des crochets de verrouillage (74) ouverts vers l'avant sont articulés surla zone arrière, au-dessus des branches longitudinales (30, 32) du support (34) en U, en vue d'emprisonner par-dessous des chevilles de verrouillage (76) aux extrémités postérieures desdites branches longitudinales (30, 32) dudit support (34) en U; et par le fait que ces crochets de verrouillage (74) sont préchargés élastiquement à la position de verrouillage et peuvent être animés d'un pivotement, à l'écart de leur position de verrouillage, par l'intermédiaire d'un câble Bowden (88) actionnable à partir du véhicule (2).

6. Dispositif selon la revendication 5, caractérisé par le fait que les chevilles de verrouillage (76) sont pourvues de capots latéraux (94) et de capots postérieurs (96).

7. Dispositif selon les revendications 3 et 6, caractérisé par le fait que les tiges (52, 54) de levage et d'abaissement sont articulées sur des tronçons (98) des chevilles de verrouillage (76) qui font saillie au-delà des capots latéraux (94).
